# EUROPÄISCHE PATENTSCHRIFT

(11) **EP 3 344 488 B1**
(45) Veröffentlichungstag und Bekanntmachung des Hinweises auf die Patenterteilung: **01.07.2020**
(21) Anmeldenummer: 16790320.2
(22) Anmeldetag: 28.10.2016
(51) Int. Cl.: B60L 7/08, B60L 7/22

(54) **ENERGIEUMWANDLUNGSEINRICHTUNG FÜR EIN ELEKTRISCH ANGETRIEBENES FAHRZEUG**
ENERGY CONVERSION DEVICE FOR AN ELECTRICALLY DRIVEN VEHICLE
DISPOSITIF DE CONVERSION D'ÉNERGIE POUR VÉHICULE À TRACTION ÉLECTRIQUE

(30) Priorität: 30.10.2015 DE 102015221266
(43) Veröffentlichungstag der Anmeldung: 11.07.2018
(73) Patentinhaber: Siemens Mobility GmbH, 81739 München (DE)
(72) Erfinder: FOERTH, Christian, 91056 Erlangen (DE); HASSLER, Stefan, 91281 Kirchenthumbach (DE); KOCH, Stefan, 91466 Gerhardshofen (DE); METHNER, Sabine, 04157 Leipzig (DE); SCHINAGL, Gerhild, 8046 Stattegg (AT); STÜTZLE, Thorsten, 90480 Nürnberg (DE)
(86) Internationale Anmeldenummer: PCT/EP2016/076028
(87) Internationale Veröffentlichungsnummer: WO 2017/072274

(56) Entgegenhaltungen:
- EP-A1- 2 578 436
- DE-A1-102013 207 952
- US-A1- 2003 233 959
- US-A1- 2006 005 738

## Beschreibung

Die Erfindung betrifft eine Energieumwandlungseinrichtung für ein Fahrzeug, insbesondere für ein Schienenfahrzeug, welche in zumindest einem Modus eine als Generatoreinheit arbeitende Einheit mit zumindest einer Synchronmaschine aufweist, und welche zumindest eine Energieableitungseinheit, die zum Ableiten zumindest eines Teils einer von der Generatoreinheit erzeugten elektrischen Energie vorgesehen ist, sowie zumindest eine Widerstandseinheit aufweist.

Es sind bereits Fahrzeuge mit Antriebsmotoren bekannt, die in einem Bremsmodus die Funktion eines elektrischen Generators aufweisen. Die im Bremsmodus erzeugte Energie kann gespeichert oder in ein elektrisches Versorgungsnetz zurückgespeist werden. Reicht eine Speicher- und/oder eine Rückspeisekapazität nicht, ist bereits vorgeschlagen worden, zumindest einen Teil der erzeugten elektrischen Energie in eine Widerstandseinheit abzuleiten.

Aus der DE 101 60 612 A1 ist ein Traktionsantrieb mit einem Traktionsumrichter und einer permanenterregten Synchronmaschine bekannt. An einer Synchronmaschine, auch als Synchronmotor bezeichnet, kann auf einfache Weise dadurch ein Bremsmoment erzeugt werden, dass die Klemmen der Synchronmaschine mit Widerständen verbunden werden. Die Schrift beschreibt das Umschalten auf eine Widerstandsgruppe, um das Fahrzeug sicher zu bremsen, wobei das Bremsmoment über die Parameter der Maschine und des Widerstandswerts sowie der Drehzahl eingestellt wird.

Aus US 2006/005738 ist außerdem ein Traditionsantrieb mit Widerstandsbremsung bekannt, bei dem Widerstandszweige in Stufen zugeschaltet werden können, um die Verlustleistung zu dosieren.

Der Erfindung liegt die Aufgabe zugrunde, die Ableitung von Energie in die Widerstandseinheit zu verbessern.

Hierzu wird vorgeschlagen, dass die Energieableitungseinheit zumindest eine Steuereinheit aufweist, die dazu vorgesehen ist, Betriebsmodi aus einer Menge von Betriebsmodi einzustellen, in welchen die Widerstandseinheit jeweils einen unterschiedlichen Widerstandswert bereitstellt. Hierdurch kann eine vorteilhafte Flexibilität in Bezug auf ein zu erzeugendes Bremsmoment und/oder eine zu erzeugende Bremsleistung des Fahrzeugs erreicht werden. Insbesondere können zu diesen Größen vorteilhaft verschiedene Kennlinienabschnitte unterschiedlicher, jeweils einem Widerstandswert zugeordneter Kennlinien zur Bereitstellung eines optimierten Bremsverfahrens miteinander kombiniert werden, indem Betriebsmodi der Menge nacheinander aktiviert werden. Die Steuereinheit ist insbesondere dazu vorgesehen, sukzessiv Betriebsmodi aus der Menge von Betriebsmodi einzustellen. Eine Reihenfolge, in welcher die Betriebsmodi nacheinander aktiviert werden, kann im Voraus festgelegt sein. Diese Reihenfolge kann insbesondere durch eine Folge absteigender oder aufsteigender Widerstandswerte bestimmt sein.

Die als Generatoreinheit arbeitende Einheit kann insbesondere zumindest einen Elektromotor in Form einer Synchronmaschine umfassen, der in einem ersten Modus - auch Antriebsmodus genannt - zum Erzeugen eines Drehmoments, d.h. zur Umwandlung von elektrischer Energie in mechanische Energie, vorgesehen ist, und in einem zweiten Modus - auch Bremsmodus genannt - ein Bremsmoment erzeugt und dabei als Generator eine mechanische Energie in eine elektrische Energie umwandelt.

Permanent erregte Synchronmaschinen besitzen dabei den Vorteil, dass sie eine Spannung erzeugen, sobald sie gedreht werden. Diese Spannung kann über Widerstände in einen Strom und entsprechend in ein Bremsmoment gewandelt werden.

Unter einer "Widerstandseinheit" soll eine Einheit verstanden werden, die dazu vorgesehen ist, einen elektrischen Widerstand im Fluss der abzuleitenden elektrischen Energie bereitzustellen. Sie dient insbesondere dazu, die über sie geführte elektrische Energie in Wärmeenergie umzuwandeln.

Die Energieumwandlungseinrichtung eignet sich für ein Fahrzeug, insbesondere für ein Schienenfahrzeug, bei welcher zumindest in einem Bremsmodus zumindest einen Teil der von der Generatoreinheit erzeugten elektrischen Energie - neben einer Ableitung in die Energieableitungseinheit - zu einer Energieaufnahmeeinheit geführt werden kann. Eine solche Energieaufnahmeeinheit kann insbesondere von einer Netzversorgung, an welche das Fahrzeug angeschlossen ist, einer Energiespeichereinheit und/oder einer internen Energieversorgung des Fahrzeugs gebildet sein, die zur Versorgung elektrischer Verbraucher - insbesondere bei Schienenfahrzeugen auch Hilfsbetriebe genannt - vorgesehen ist. Die Energieumwandlungseinrichtung kann dabei vorteilhaft zur Unterstützung der Energieaufnahmeeinheit dienen, z.B. wenn eine Aufnahmekapazität dieser eingeschränkt ist und/oder nicht ausreicht.

Ist das Fahrzeug mit einer mechanischen Bremseinheit, insbesondere einer Reibungsbremse, ausgestattet, die in einem Bremsmodus zur Reduktion einer Drehzahl des Generators vorgesehen ist, dient die Energieumwandlungseinrichtung vorteilhafterweise dazu, ein gewünschtes Bremsmoment in zumindest einem Drehzahlbereich und im Zusammenwirken mit der Bremseinheit zu erzeugen.

Die Steuereinheit bewirkt ein Wechseln zwischen zwei Betriebsmodi der Menge von Betriebsmodi insbesondere in Abhängigkeit eines erfassten Parameters.

In einer bevorzugten Ausführung der Erfindung wird vorgeschlagen, dass die Energieumwandlungseinrichtung eine Erfassungseinheit zur Erfassung wenigstens einer kinematischen Kenngröße des Fahrzeugs aufweist, wobei die Steuereinheit dazu vorgesehen ist, Betriebsmodi aus der Menge von Betriebsmodi in Abhängigkeit von der erfassten kinematischen Kenngröße einzustellen. Hierdurch kann eine weitestgehend automatische, an eine aktuelle Betriebssituation - insbesondere an einen aktuellen Wert der kinematischen Kenngröße - angepasste Optimierung der Energieableitung stattfinden. Die kinematische Kenngröße kann insbesondere eine lineare Geschwindigkeit, eine Rotationsgeschwindigkeit, eine Drehzahl und/oder eine für zumindest eine dieser Größen repräsentative Kenngröße sein, wie z.B. eine Spannungskenngröße oder eine Stromkenngröße. Ein Übergang von einem ersten Betriebsmodus in einen zweiten Betriebsmodus der Menge von Betriebsmodi oder umgekehrt wird von der Steuereinheit veranlasst, vorzugsweise wenn die kinematische Kenngröße oder eine aus dieser ermittelte Größe einen vorbestimmten Schwellwert erreicht, d.h. unterschreitet oder überschreitet.

Die vorgeschlagene Energieumwandlungseinrichtung kommt insbesondere bei einem Bremsmodus des Fahrzeugs im Einsatz, wobei die Generatoreinheit von zumindest einem elektrischen Fahrmotor des Fahrzeugs, welcher als eine Synchronmaschine ausgebildet ist, gebildet wird. Die Widerstandseinheit entspricht hierbei insbesondere einer Bremswiderstandseinheit.

Durch eine geeignete Steuerung der Widerstandseinheit können die Bremseigenschaften des Fahrzeugs vorteilhaft verbessert werden. Insbesondere kann mit der Änderung des Widerstandwerts eine optimierte Kennlinie für die Bremswirkung, insbesondere für ein Bremsmoment und/oder eine Bremsleistung, eingestellt werden, sodass eine hohe Effizienz in der Bremsung des Fahrzeugs für ein breites Spektrum von Betriebssituationen, insbesondere ausgehend von hohen Geschwindigkeiten, erreicht werden kann.

Die Energieumwandlungseinrichtung kann vorteilhafterweise in zumindest einem Geschwindigkeitsbereich im Zusammenwirken mit einer mechanischen Bremseinheit, insbesondere einer Reibungsbremse des Fahrzeugs ein Bremsmoment erzeugen.

Die von der Energieumwandlungseinrichtung im Bremsmodus umzuwandelnde mechanische Energie ist die kinetische Energie und gegebenenfalls zusätzlich eine potentielle Energie des Fahrzeugs. Mit der vorgeschlagenen Maßnahme kann eine hohe Sicherheit im Betrieb eines für hohe Geschwindigkeiten ausgelegten Schienenfahrzeugs erreicht werden. Unter einer "hohen Geschwindigkeit" soll dabei insbesondere eine Geschwindigkeit von zumindest 300 km/h, bevorzugt von zumindest 350 km/h verstanden werden. Mit der erfindungsgemäßen Maßnahme können gegenüber herkömmlichen Lösungen auf eine sichere Art Bremsvorgänge ausgehend von solchen hohen Geschwindigkeiten ausgeführt werden.

Eine einfache, in Bezug auf die Fahrzeuggeschwindigkeit optimierte Steuerung der Widerstandseinheit kann erreicht werden, wenn die kinematische Kenngröße für die Fahrzeuggeschwindigkeit repräsentativ ist. Durch die vorgeschlagene Maßnahme kann eine für den Hochgeschwindigkeitsbereich optimierte Bremswirkung auch in einem mittleren Geschwindigkeitsbereich nahezu aufrechterhalten werden. Hierbei ist ein erster Betriebsmodus der Menge insbesondere dem Hochgeschwindigkeitsbereich zugeordnet, während ein zweiter Betriebsmodus der Menge insbesondere dem mittleren Geschwindigkeitsbereich zugeordnet ist.

Ein "Hochgeschwindigkeitsbereich" entspricht dabei insbesondere einer Geschwindigkeitspanne zwischen ca. 50% und 100% der maximalen Geschwindigkeit - bei einem für Hochgeschwindigkeiten ausgelegten Schienenfahrzeug z.B. der Spanne von ca. 175 km/h bis die maximale Geschwindigkeit, z.B. 350 km/h - und ein "mittlerer Geschwindigkeitsbereich" entspricht insbesondere einer Spanne zwischen ca. 10% und ca. 50% der maximalen Geschwindigkeit - beim genannten Schienenfahrzeug der Spanne von ca. 40 km/h bis ca. 175 km/h. Die Aufteilung des Geschwindigkeitsspektrums im Hochgeschwindigkeitsbereich und mittleren Geschwindigkeitsbereich erfolgt insbesondere durch die Vorgabe eines Geschwindigkeitsschwellwerts, welcher sich vorzugweise in einer Spanne von ca. 10% oberhalb und unterhalb der Hälfte der maximalen Geschwindigkeit befindet. Unter der maximalen Geschwindigkeit soll insbesondere die maximale zugelassene Geschwindigkeit im Fahrgastbetrieb verstanden werden.

Durch ein Wechseln von einem ersten, für den Hochgeschwindigkeitsbereich optimierten Betriebsmodus in einen zweiten, für den mittleren Geschwindigkeitsbereich optimierten Betriebsmodus kann eine Kombination vorteilhafter Kennlinienabschnitte erreicht werden, die für diese Geschwindigkeitsbereiche gelten.

In diesem Zusammenhang kann eine vorteilhafte Kennlinie für ein Bremsmoment des Fahrzeugs erreicht werden, wenn die Steuereinheit dazu vorgesehen ist, bei einem Übergang von einem Hochgeschwindigkeitsbereich in einen mittleren Geschwindigkeitsbereich von einem ersten Betriebsmodus der Menge Betriebsmodi in einen zweiten Betriebsmodus der Menge zur Verminderung des Widerstandswerts zu wechseln. Weist die Menge zwei Betriebsmodi auf, so weist der Widerstandswert im zweiten Betriebsmodus besonders vorteilhaft zumindest 40% und maximal 60% des Widerstandswerts im ersten Betriebsmodus auf. Bevorzugt weist der Widerstandswert im zweiten Betriebsmodus einen Wert in einer Spanne von 5% unterhalb und oberhalb der Hälfte des Widerstandswerts im ersten Betriebsmodus auf.

Weiterhin wird vorgeschlagen, dass die Widerstandseinheit in einer Leistungsversorgungseinheit angeordnet ist, welche, in einem Antriebsmodus des Fahrzeugs, die in einem Bremsmodus als Generatoreinheit arbeitende Einheit mit elektrischer Leistung versorgt. Hierdurch kann eine konstruktiv einfache, platzsparende Ausgestaltung erreicht werden.

Die Energieumwandlungseinrichtung weist vorteilhafterweise zumindest eine Stromrichtereinheit auf, die im eingebauten Zustand der Energieumwandlungseinrichtung leistungstechnisch zwischen der Generatoreinheit und der Widerstandseinheit geschaltet ist. Ein in den Betriebsmodi durch die Generatoreinheit erzeugter und in die Widerstandseinheit abgeleiteter Strom wird daher über die Stromrichtereinheit geführt. Die Stromrichtereinheit hat in einem Bremsmodus typischerweise die Funktion eines Gleichrichters, welcher einen von der Generatoreinheit erzeugten Strom gleichrichtet. Das gleichrichtete Signal kann insbesondere in einen sogenannten Zwischenkreis gespeist werden.

In diesem Zusammenhang kann eine konstruktive einfache Ausführung erreicht werden, wenn die Widerstandseinheit an einen Zwischenkreis angeschlossen ist, welcher von der Stromrichtereinheit speisbar ist. Dabei ist die Widerstandseinheit zweckmäßigerweise im Zwischenkreis, insbesondere zwischen der positiven und der negativen Zwischenkreisschiene geschaltet.

Alternativ oder zusätzlich wird vorgeschlagen, dass die Energieumwandlungseinrichtung zumindest eine Steuervorrichtung aufweist, welche die Stromrichtereinheit derart steuert, dass der Betrieb dieser in den Betriebsmodi der Menge von Betriebsmodi zumindest eine Sperrung von Schaltventilen der Stromrichtereinheit umfasst. Eine effiziente, verlustarme Stromführung durch die Stromrichtereinheit kann hierdurch erfolgen. Insbesondere wird der Strom über Freilaufdioden geführt, die jeweils parallel zu einem Schaltventil geschaltet sind. In dieser Konfiguration nimmt die Stromrichtereinheit funktional die Form einer Diodenbrücke an. Unter einer "Sperrung" eines Schaltventils soll insbesondere das Versetzen desselben in einen nichtleitenden Zustand für eine Zeitspanne, die länger als die Dauer eines Schaltzyklus der Stromrichtereinheit ist. Die Zeitspanne entspricht dabei vorzugsweise zumindest der Zeit, in welcher ein Betriebsmodus aus der Menge von Betriebsmodi ausgeführt wird.

Zur Änderung des Widerstandswerts der Widerstandseinheit kann diese zumindest einen variablen, steuerbaren Widerstandswert aufweisen. Zum Erreichen einer konstruktiven einfachen Ausgestaltung der Energieableitungseinheit wird jedoch vorgeschlagen, dass die Widerstandseinheit einen Satz von Widerstandsmitteln und eine mit zumindest einem der Widerstandsmittel in Wirkverbindung stehende Schaltvorrichtung aufweist, wobei ein Wechseln zwischen Betriebsmodi der Menge von Betriebsmodi zumindest eine Betätigung der Schaltvorrichtung umfasst. Die zumindest eine Steuereinheit steht zweckmäßigerweise zur Betätigung der Schaltvorrichtung in Wirkverbindung mit dieser. Die Widerstandsmittel sind insbesondere als ohmsche Widerstände ausgebildet.

Die vorgeschlagene Ausführung der Energieableitungseinheit basiert auf dem Einsatz einer einfachen Schaltungstopologie, die aufwandsarm und einfach zu steuern ist. Dies ist besonders vorteilhaft, da ein zu Zulassungszwecken des Fahrzeugs erforderlicher Nachweis einer sicheren Steuerung in dieser Topologie gegenüber beispielsweise einer speziellen Umrichtersteuerung einfacher zu erbringen ist.

Für einen Wechsel zwischen zwei Betriebsmodi der Menge von Betriebsmodi kann die Schaltvorrichtung die Anzahl der aktiven Widerstandsmittel und/oder eine Schaltungstopologie bereits aktiver Widerstandsmittel ändern, beispielsweise indem eine Parallelschaltung in eine Reihenschaltung oder umgekehrt überführt wird.

Steht die Schaltvorrichtung mit sämtlichen Widerstandsmitteln in Wirkverbindung kann sie, in einem von den Betriebsmodi der Menge von Betriebsmodi unterschiedlichen Arbeitsmodus, insbesondere in einem Antriebsmodus, sämtliche Widerstandsmittel deaktivieren. Beim Einstellen eines Betriebsmodus aus der Menge von Betriebsmodi aktiviert sie dann zumindest eines der Widerstandsmittel.

In einer einfachen Ausführung der Erfindung wird vorgeschlagen, dass die Steuereinheit dazu vorgesehen ist, mittels der Schaltvorrichtung beim Einstellen eines Betriebsmodus der Menge von Betriebsmodi eine parallele Schaltung von Widerstandsmitteln des Satzes zu aktivieren. Es kann hierbei beim Übergang in diesen Betriebsmodus eine einfache Reduktion des Widerstandswerts der Widerstandseinheit erreicht werden. Dabei kann beispielsweise eine Halbierung des Widerstandswertes besonders einfach erreicht werden, wenn parallel zu schaltende Widerstandsmittel einen identischen oder nahezu identischen Widerstandswert aufweisen und ausgehend von einer Konfiguration in einem ersten Betriebsmodus mit einem aktiven Widerstandsmittel eine parallele Schaltung der Widerstandsmittel in einem zweiten Betriebsmodus aktiviert wird.

Unter einem "aktiven" Widerstandsmittel und einer "aktiven" Schaltung soll ein Widerstandsmittel bzw. eine Schaltung verstanden werden, die derart an einen Stromkreis angeschlossen ist, dass sie zur Wirkung der Energieableitungseinheit beiträgt. Anders formuliert ist ein aktives Widerstandsmittel bzw. eine aktive Schaltung in einem Zustand, in dem zumindest ein Teil des von der Generatoreinheit erzeugten Stroms über das Widerstandsmittel bzw. die Schaltung fließt. Unter einem "Aktivieren" soll ein Versetzen des Widerstandsmittels in den aktiven Zustand verstanden werden.

In einer vorteilhaften Weiterbildung der Erfindung wird vorgeschlagen, dass die Steuereinheit dazu vorgesehen ist, in zumindest einem Betriebsmodus der Menge von Betriebsmodi mittels der Schaltvorrichtung ein erstes und ein zweites Widerstandsmittel abwechselnd zu aktivieren, wodurch ein thermische Belastung der Widerstandsmittel vorteilhaft vermindert werden kann.

Außerdem geht die Erfindung von einem Verfahren zur Umwandlung einer in zumindest einem Modus von einer als Generatoreinheit arbeitenden Einheit mit zumindest einer Synchronmaschine erzeugten elektrischen Energie aus, bei welchem zumindest ein Teil einer von der Generatoreinheit erzeugten elektrischen Energie über eine Energieableitungseinheit abgeleitet wird und die Energieableitungseinheit zumindest eine Widerstandseinheit aufweist.

Es wird vorgeschlagen, dass ausgehend von einem ersten Betriebsmodus, in welchem die Widerstandseinheit einen ersten Widerstandswert bereitstellt, in einen zweiten Betriebsmodus umgeschaltet wird, in welchem die Widerstandseinheit einen zweiten, unterschiedlichen Widerstandswert bereitstellt. Der erste und der zweite Betriebsmodus gehören vorteilhafterweise zu einer Menge von Betriebsmodi, wobei eine Steuereinheit vorgesehen ist, Betriebsmodi aus der Menge von Betriebsmodi einzustellen.

Zu den vorteilhaften Wirkungen des vorgeschlagenen Verfahrens wird auf die Ausführungen zur erfindungsgemäßen Energieumwandlungseinrichtung verwiesen.

Es wird ein Ausführungsbeispiel der Erfindung erläutert. Es zeigen:
- Figur 1:: ein Schienenfahrzeug mit Triebwagen in einer Seitenansicht,
- Figur 2:: eine Antriebseinheit eines Triebwagens, mit einer Leistungsversorgungseinheit,
- Figur 3:: die Ableitung einer bei einem Bremsen erzeugten Energie in eine Widerstandseinheit der Leistungsversorgungseinheit,
- Figur 4:: das von der Antriebseinheit bei der Energieableitung erzeugte Bremsmoment für eine Triebachse als Funktion der Geschwindigkeit und
- Figur 5:: die für eine Triebachse bei der Energieableitung erzeugte Bremsleistung.

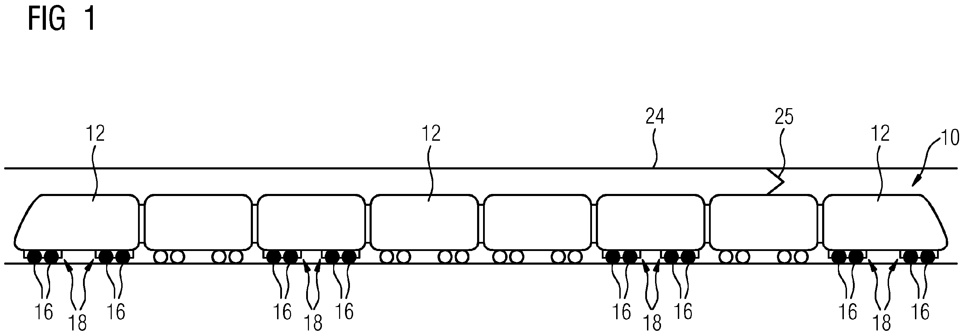

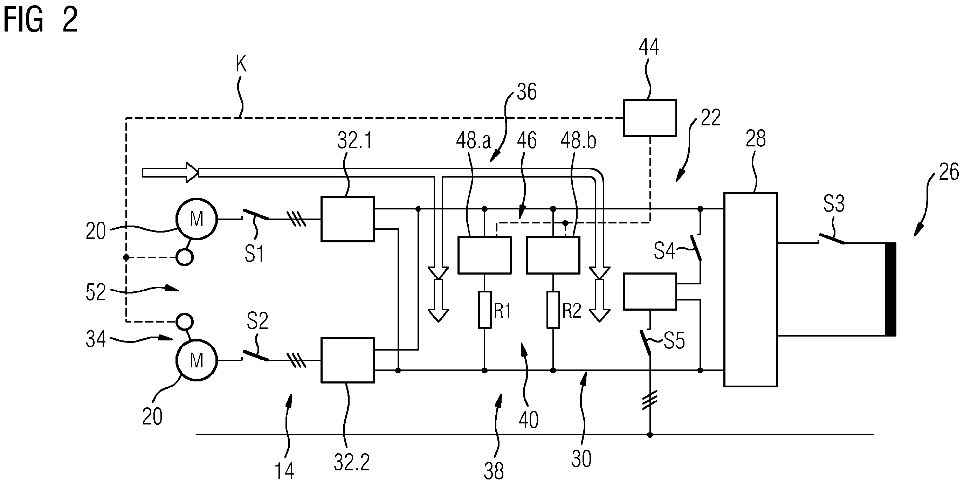

Figur 1 zeigt ein beispielhaftes Schienenfahrzeug 10 in einer schematischen Seitenansicht. Es ist als Verband von Wagen 12 ausgebildet, die jeweils für den Transport von Passagieren ausgestattet sind. Hierzu weisen die Wagen 12 zumindest einen Fahrgastraum auf, welcher für den Aufenthalt von Passagieren vorgesehen ist. Zumindest einer der Wagen 12 ist als Triebwagen ausgebildet, welcher auf wenigstens einer mittels einer Antriebseinheit 14 (siehe Figur 2) antreibbaren Triebachse 16 abgestützt ist. In der betrachteten Konfiguration weist das Schienenfahrzeug 10 zumindest vier Triebwagen auf, die jeweils auf zumindest zwei, insbesondere vier Triebachsen 16 abgestützt sind. Die Abstützung der Triebwagen auf den Triebachsen 16 erfolgt mittels zwei Triebdrehgestellen 18, wobei pro Triebdrehgestell 18 jeweils zwei Triebachsen 16 gelagert sind. Den Triebachsen 16 eines Triebdrehgestells 18 ist jeweils eine Antriebseinheit 14 zugeordnet, die in Figur 2 näher dargestellt ist. Diese weist zwei permanenterregte Synchronmaschinen als Fahrmotoren 20 auf, die jeweils mit einer unterschiedlichen Triebachse 16 antriebstechnisch verbunden sind. Zur Versorgung der Fahrmotoren 16 eines Triebdrehgestells 18 mit elektrischer Leistung weist die jeweilige Antriebseinheit 14 eine Leistungsversorgungseinheit 22 auf. Diese ist in Figur 2 näher dargestellt.

Das Schienenfahrzeug 10 ist als elektrisches Fahrzeug ausgebildet, welches dessen Betriebsenergie von einer externen Netzversorgung 24 bezieht. Hierzu weist es bekannterweise einen Stromabnehmer 25 auf, welcher die von der Netzversorgung 24 bereitgestellte Hochspannung abgreift. Diese Hochspannung kann eine Wechselspannung sein und die typischen Spannungswerten 15kV 16 Hz 2/3 oder 25kV 50 Hz aufweisen. Alternativ kann die Hochspannung eine Gleichspannung sein und insbesondere die typischen Werte 1,5kV oder 3kV aufweisen. Das Schienenfahrzeug 10 ist insbesondere für den Betrieb unter einer Wechselspannung vorgesehen, wobei es jedoch sowohl für den Betrieb unter Wechselspannung als auch für den Betrieb unter Gleichspannung geeignet sein kann.

In einem Wechselspannungsbetrieb wird die von der Netzversorgung 24 bereitgestellte Hochspannung mittels einer Transformationseinheit 26 heruntertransformiert. Diese kann - wie in Figur 2 zu sehen - als klassischer Transformator oder als Stromrichtereinheit - insbesondere als sogenannter Direktumrichter - ausgebildet sein. Der in Figur 2 gezeigte Ausgang der Transformationseinheit 26 ist mit den Leistungsversorgungseinheiten 22 leistungstechnisch verbunden.

Das Schienenfahrzeug 10 weist außerdem eine nicht näher gezeigte Bremseinrichtung auf, welche elektrisch und/oder pneumatisch steuerbare Reibungsbremsen umfasst.

Figur 2 zeigt eine Schaltungstopologie einer der Antriebseinheiten 14. Sie weist wie oben beschrieben die Fahrmotoren 20 des entsprechenden Triebdrehgestells 18 und die diesen zugeordnete Leistungsversorgungseinheit 22 auf. Der netzseitige Eingang der Leistungsversorgungseinheit 22 wird im Wechselspannungsbetrieb mit dem Ausgangssignal der Transformationseinheit 26 gespeist. Die Leistungsversorgungseinheit 22 weist eine erste, netzseitig angeordnete Stromrichtereinheit 28 auf, welche - bei einem von der Transformationseinheit 26 in Richtung zu den Fahrmotoren 20 hin geführten Energiefluss, insbesondere in einem Traktionsmodus - dieses Ausgangssignal gleichrichtet. Im Traktionsmodus führt die erste Stromrichtereinheit 28 demnach eine Gleichrichterfunktion aus. Die erste Stromrichtereinheit 28 wird insbesondere von einem Vierquadrantensteller gebildet.

Die Leistungsversorgungseinheit 22 umfasst außerdem einen Zwischenkreis 30, welcher im Betrieb ein Gleichspannungssignal führt. Im Traktionsmodus wird der Zwischenkreis 30 mit dem von der ersten Stromrichtereinheit 28 gleichgerichteten Signal gespeist.

Die Leistungsversorgungseinheit 22 weist ferner zwei motorseitig angeordnete Stromrichtereinheiten 32.1, 32.2 auf, die jeweils einem der Fahrmotoren 20 zugeordnet sind. Im Traktionsmodus führen die Stromrichtereinheiten 32.1, 32.2 jeweils die Funktion eines Wechselrichters aus, welcher ausgehend von einem im Zwischenkreis 30 geführten Gleichstrom einen Wechselstrom erzeugt. Insbesondere sind sie jeweils als Pulswechselrichter ausgebildet.

In einem Gleichspannungsbetrieb kann das Gleichspannungssignal der Netzversorgung direkt in den Zwischenkreis 30 gespeist oder mittels der Stromrichtereinheit 28, die als Tiefsetzsteller arbeitet, transformiert werden.

Im Traktionsmodus des Schienenfahrzeugs 10 fließt wie oben beschrieben eine elektrische Energie von der Netzversorgung 24 über die Transformationseinheit 26 und die Leistungsversorgungseinheit 22, d.h. insbesondere die erste Stromrichtereinheit 28, den Zwischenkreis 30 und die Stromrichtereinheiten 32 zu den Fahrmotoren 20, welche ein Teil der bezogenen elektrischen Energie in kinetische Energie umwandeln.

In einem Bremsmodus des Schienenfahrzeugs 10 erfolgt ein Energiefluss in umgekehrter Richtung von den Fahrmotoren 20 zumindest teilweise über die Leistungsversorgungseinheit 22 und die Transformationseinheit 26 zur Netzversorgung 24. In diesem Bremsmodus bilden die Fahrmotoren 20 eine Generatoreinheit 34 einer Energieumwandlungseinrichtung 36, die die kinetische und ggf. potentielle Energie des Schienenfahrzeugs 10 in eine andere Energieform umwandelt. Die Generatoreinheit 34 erzeugt aus dieser Energie auf bekannte Weise eine elektrische Energie.

In bestimmten Anwendungssituationen, in welchen eine Einspeisung der Energie in die Netzversorgung 24 beschränkt werden soll oder sogar nicht möglich ist, oder diese Einspeisung zur Erzeugung eines Sollbremsmoments nicht ausreicht - wie insbesondere bei einer Schnellbremsung bei hoher Geschwindigkeit - wird die von der Generatoreinheit 34 erzeugte elektrische Energie von der Rückspeisung in die Netzversorgung 24 weg abgeleitet. Hierzu weist die Energieumwandlungseinrichtung 36 eine Energieableitungseinheit 38 auf.

Die Energieableitungseinheit 38 weist eine Widerstandseinheit 40 auf, die dazu vorgesehen ist, im Fluss der abzuleitenden elektrischen Energie einen bestimmten Widerstandswert bereitzustellen. Sie weist zwei Widerstandsmittel R1, R2 auf, die jeweils als ohmscher Widerstand ausgebildet sind. Da die Widerstandseinheit 40 im Bremsmodus des Schienenfahrzeugs 10 benutzt wird, entspricht die Widerstandseinheit 40 einer Bremswiderstandseinheit. Die Widerstandseinheit 40 ist mit den Stromrichtereinheiten 32.1, 32.3 derart verbunden, dass eine von den Fahrmotoren 20 erzeugte und über sie geführte Energie in die Widerstandsmittel R1, R2 speisbar ist. Dies ist in der Figur mittels grober Pfeile dargestellt. Im Bremsmodus sind demnach die Stromrichtereinheiten 32.1, 32.2 im Energiefluss zwischen den Fahrmotoren 20 - und daher der Generatoreinheit 34 - und der Widerstandseinheit 40 angeordnet. Anders ausgedrückt sind die Stromrichtereinheiten 32.1, 32.2 jeweils mit der Generatoreinheit 38 einerseits und der Widerstandseinheit 40 andererseits leistungstechnisch verbunden. Insbesondere ist die Widerstandseinheit 40 an den Zwischenkreis 30 angeschlossen, welcher von den Stromrichtereinheiten 32.1, 32.2 im Bremsmodus gespeist wird. Die Widerstandseinheit 40 ist zwischen der positiven Schiene und der negativen Schiene des Zwischenkreises 30 geschaltet.

Die Energieableitungseinheit 38 umfasst außerdem eine Steuereinheit 44 auf, die dazu vorgesehen ist, wahlweise einen ersten Betriebsmodus, in welchem die Widerstandseinheit 40 einen ersten Widerstandswert bereitstellt, oder einen zweiten Betriebsmodus einzustellen, in welchem die Widerstandseinheit 40 einen zweiten Widerstandswert bereitstellt.

Hierzu weist die Widerstandseinheit 40 eine von der Steuereinheit 44 zur Einstellung des ersten bzw. zweiten Betriebsmodus betätigbare Schaltvorrichtung 46 auf. Diese dient dazu, das erste und/oder das zweite Widerstandsmittel R1, R2 von dem durch die Generatoreinheit 34 erzeugten Energiefluss wahlweise zu trennen oder mit diesem zu verbinden. Sie weist zwei Schaltmittel 48.a, 48.b auf, die jeweils einem unterschiedlichen Widerstandsmittel R1 bzw. R2 zugeordnet sind. Insbesondere sind die Schaltmittel 48.a, 48.b voneinander unabhängig betätigbar.

Im ersten Betriebsmodus der Energieableitungseinheit 38 wird der erste Widerstandswert dadurch bereitgestellt, dass eines der Widerstandsmittel R1, R2 mit der Generatoreinheit 34 leistungstechnisch verbunden ist. Diese Verbindung ist durch ein Schließen des Schaltmittels 48.a oder 48.b hergestellt. Im zweiten Betriebsmodus wird der zweite Widerstandswert dadurch bereitgestellt, dass beide Widerstandsmittel R1, R2, insbesondere in paralleler Schaltung zueinander, mit der Generatoreinheit 34 leistungstechnisch verbunden sind. Dies erfolgt mittels eines Zuschaltens des Widerstandsmittels R2 bzw. R1 durch ein Schließen des Schaltmittels 48.b. bzw. 48.a. Sind die Widerstandswerte des Widerstandsmittel R1, R2 identisch, kann durch eine Parallelschaltung ein Widerstandswert der Widerstandseinheit 40 im zweiten Betriebsmodus bereitgestellt werden, der gegenüber dem Widerstandswert im ersten Betriebsmodus halbiert ist.

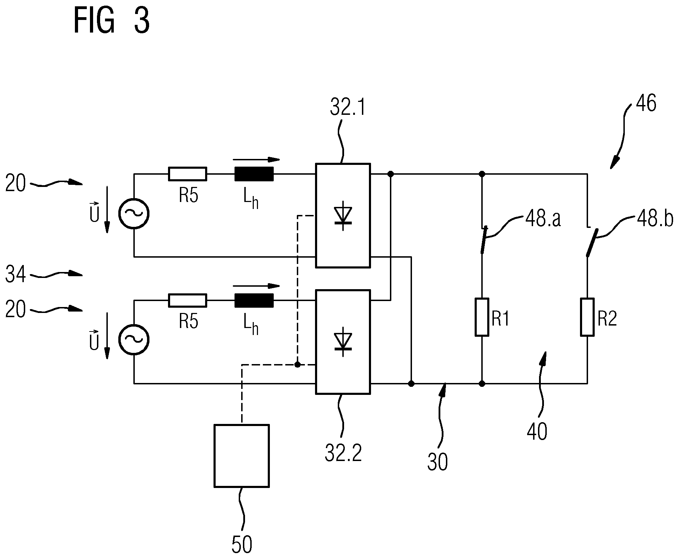

In den oben beschriebenen Betriebsmodi erfolgt eine Führung eines von einem Fahrmotor 20 erzeugten elektrischen Wechselstroms über die zugeordnete Stromrichtereinheit 32 in einem Sperrmodus dieser Stromrichtereinheit 32. In diesem Sperrmodus sind die Schaltventile - insbesondere Leistungstransistoren, z.B. IGBTs - der Stromrichereinheit 32 permanent in einem gesperrten Zustand, sodass der elektrische Strom ausschließlich über den Schaltventilen parallel geschaltete Freilaufdioden geführt wird. Die Stromrichtereinheit 32 nimmt - wie in Figur 3 dargestellt - daher die Form einer Diodenbrücke (auch "B6-Brücke" genannt) an, welche den elektrischen Strom gleichrichtet. In Figur 3 sind die Fahrmotoren 20 in einem Ersatzschaltbild als Spannungsquelle und mit einem äquivalenten Widerstand und einer äquivalenten Induktivität dargestellt. Das Versetzen der Schaltventile in den Sperrzustand erfolgt mittels einer Steuervorrichtung 50, die in Figur 3 schematisch dargestellt ist.

Die Umschaltung zwischen dem ersten Betriebsmodus und dem zweiten Betriebsmodus, d.h. insbesondere ein Zuschalten des zweiten Widerstandsmittels R2 bzw. R1 parallel zum ersten Widerstandsmittel R1 bzw. R2 erfolgt abhängig von einer kinematischen Kenngröße K des Schienenfahrzeugs 10. In der betrachteten Ausführung erfolgt die Steuerung der Schaltvorrichtung 46 auf der Grundlage einer Kenngröße, die von der Fahrzeuggeschwindigkeit V abhängt. Diese Kenngröße K entspricht insbesondere einer Drehzahl eines Radsatzes oder einer mit dem Radsatz antriebstechnisch gekoppelten Komponente der Antriebseinheit 14. Dabei kann es sich um die Drehzahl eines Rads, der Radsatzwelle oder einer mit dieser antriebstechnisch gekoppelten Getriebekomponente oder Motorwelle handeln. Hierzu weist das Schienenfahrzeug 10 eine Erfassungseinheit 52 zur Erfassung der Kenngröße K auf, die Drehzahlsensoren aufweist (in Figur 2 stark schematisch dargestellt). Die Erfassungseinheit 52 steht in Wirkverbindung mit der Steuereinheit 44, welche dazu dient, erfasste Messwerte auszuwerten. Die Kenngröße K kann alternativ oder zusätzlich über weitere Sensormittel gewonnen werden, wie z.B. über einen Inertialsensor oder eine Ortungseinheit wie einen GPS-Sensor.

Die Betätigung der Schaltvorrichtung 46 durch die Steuereinheit 44 erfolgt, wenn aus der überwachten Kenngröße K ermittelt wird, dass das Schienenfahrzeug 10 bei einem Bremsvorgang ausgehend von einer Anfangsgeschwindigkeit, insbesondere der maximal zugelassenen Geschwindigkeit, einen voreingestellten Geschwindigkeitsschwellwert GSW erreicht.

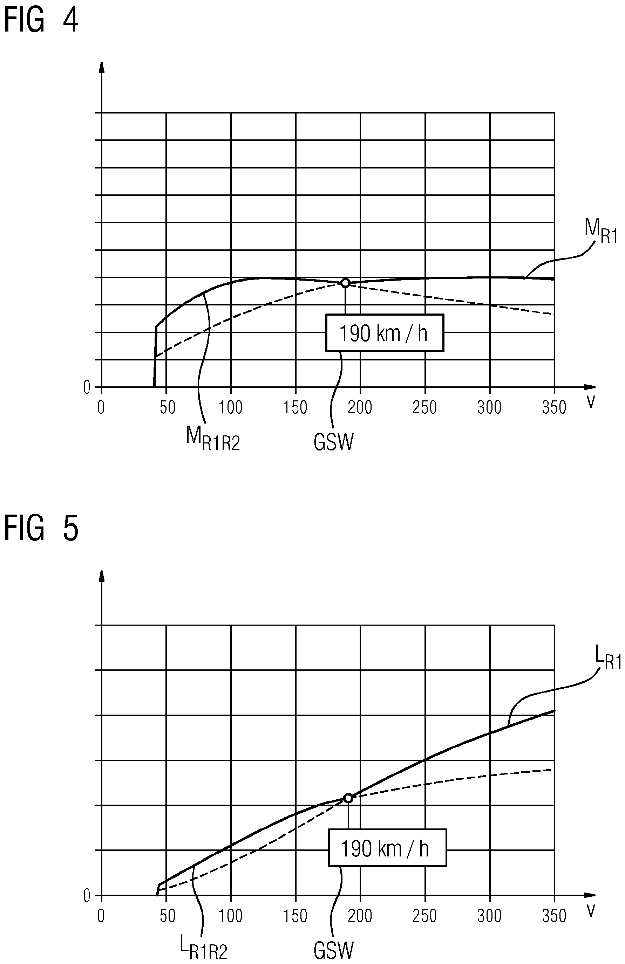

Dies wird anhand der Figur 4 näher erläutert. Sie entspricht einem Diagramm, in welchem das Bremsmoment M pro Triebachse 16 als Funktion der Fahrzeuggeschwindigkeit V dargestellt ist. Bei der Einleitung eines Bremsvorgangs oberhalb des Schwellwerts GSW = 190 km/h, insbesondere bei der höchsten zugelassenen Geschwindigkeit von 350 km/h, werden wie oben beschrieben die Schaltventile der Stromrichtereinheiten 32 in den Sperrzustand versetzt, wobei ein Teil des von den Fahrmotoren erzeugten Stroms in die Widerstandseinheit 40, und zwar z.B. wie in Figur 3 dargestellt in das erste Widerstandsmittel R1 fließt. Das Bremsmoment M in der Spanne zwischen der höchsten zugelassenen Geschwindigkeit und dem Schwellwert GSW weist einen nahezu konstanten Wert auf. Der Verlauf des Bremsmoments M für diesen Widerstandswert R = R1 im ersten Betriebsmodus ist mittels der Kurve M_{R1} gezeigt. Um ein Sinken des Bremsmoments M unterhalb dieses Werts zu vermeiden, wird beim Erreichen des Geschwindigkeitsschwellwerts GSW die Schaltvorrichtung 46 durch die Steuereinheit 44 betätigt. Mit dem Wechseln in den zweiten Betriebsmodus, d.h. der Zuschaltung des Widerstandsmittels R2 weist die Widerstandseinheit 40 einen Widerstandswert R = 1 / (1/R1 + 1/R2) auf. Der Verlauf des Bremsmoments M für diesen Widerstandswert ist mittels der Kurve M_{R1R2} gezeigt. Wie der Figur zu entnehmen, kann das Bremsmoment M beim vorherigen Wert während der weiteren Bremsung zumindest für eine gewisse Geschwindigkeitspanne von ca. 100 km/h aufrechterhalten werden.

Figur 5 zeigt ein Diagramm, in welchem die Bremsleistung L als Funktion der Geschwindigkeit V dargestellt ist. Die Kurve L_{R1} entspricht dem Verlauf der Bremsleistung L für den Widerstandswert R = R1 im ersten Betriebsmodus. Mit der oben beschriebenen Umschaltung in den zweiten Betriebsmodus kann unterhalb des Geschwindigkeitsschwellwerts GSW beim Folgen der Kurve L_{R1R2} für den Widerstandswert R = 1 / (1/R1 + 1/R2) eine Erhöhung der Bremsleistung gegenüber der Konfiguration mit R = R1 erreicht werden.

Außerdem ist vorteilhaft, wenn im ersten Betriebsmodus, in welchem nur eines der Widerstandsmittel R1, R2 aktiv ist, Umschaltungen zwischen den Widerstandsmitteln R1 und R2 erfolgen. Diese von der Schaltvorrichtung 46 bewirkten Umschaltungen dienen dazu, die thermische Belastung der Widerstandsmittel zu verringern. Sie erfolgen dabei periodisch oder auf der Grundlage der ermittelten Belastzustände der Widerstandsmittel. Diese können z.B. durch die Erfassung der Temperatur der Widerstandsmittel ermittelt werden.

Die obige Beschreibung bezieht sich auf eine Ausführung, bei welcher die Menge von Betriebsmodi zwei Betriebsmodi aufweist. In einer Ausführungsvariante ist denkbar, dass mehr als zwei Betriebsmodi implementiert werden. Hierzu kann die Widerstandseinheit mehr als zwei Widerstandsmittel aufweisen.

## Patentansprüche

1. Energieumwandlungseinrichtung für ein Schienenfahrzeug, welche
- eine in zumindest einem Modus als Generatoreinheit (34) arbeitende Einheit mit zumindest einer Synchronmaschine (20) aufweist,
- zumindest eine Energieableitungseinheit (38), die zum Ableiten zumindest eines Teils einer von der Generatoreinheit (34) erzeugten elektrischen Energie vorgesehen ist, und zumindest eine Widerstandseinheit (40) aufweist,
- eine Erfassungseinheit (52) zur Erfassung wenigstens einer kinematischen Kenngröße (K) des Fahrzeugs aufweist, wobei die kinematische Kenngröße (K) für eine Geschwindigkeit (V) des Fahrzeugs repräsentativ ist, und
- eine Steuereinheit (44) aufweist, die dazu vorgesehen ist, Betriebsmodi aus einer Menge von Betriebsmodi, in welchen die Widerstandseinheit (40) jeweils einen unterschiedlichen Widerstandswert bereitstellt, in Abhängigkeit von der erfassten kinematischen Kenngröße (K) einzustellen,
**dadurch gekennzeichnet, dass**
die Steuereinheit ferner dazu vorgesehen ist, bei einem Übergang von einem Hochgeschwindigkeitsbereich in einen mittleren Geschwindigkeitsbereich von einem ersten Betriebsmodus in einen zweiten Betriebsmodus zur Verminderung des Widerstandswerts zu wechseln.

2. Energieumwandlungseinrichtung nach Anspruch 1,
**gekennzeichnet durch**
eine Leistungsversorgungseinheit (22), in der die Widerstandseinheit (40) angeordnet ist, und welche in einem Antriebsmodus die Einheit mit elektrischer Leistung versorgt.

3. Energieumwandlungseinrichtung nach einem der vorhergehenden Ansprüche,
**gekennzeichnet durch**
zumindest eine Stromrichtereinheit (32.1, 32.2), die leistungstechnisch zwischen der Generatoreinheit (34) und der Widerstandseinheit (40) geschaltet ist, wobei die Widerstandseinheit (40) an einen Zwischenkreis (30) angeschlossen ist, welcher von der zumindest einen Stromrichtereinheit (32.1, 32.2) speisbar ist.

4. Energieumwandlungseinrichtung nach Anspruch 3,
**gekennzeichnet durch**
eine Steuervorrichtung (50), welche die zumindest eine Stromrichtereinheit (32.1, 32.2) derart steuert, dass deren Betrieb in den Betriebsmodi zumindest eine Sperrung von Schaltventilen der Stromrichtereinheit (32.1, 32.2) umfasst.

5. Energieumwandlungseinrichtung nach einem der vorhergehenden Ansprüche,
**dadurch gekennzeichnet, dass**
die Widerstandseinheit (40) einen Satz von Widerstandsmitteln (R1, R2) und zumindest eine mit zumindest einem der Widerstandsmittel (R1, R2) in Wirkverbindung stehende Schaltvorrichtung (46) aufweist, wobei ein Wechseln zwischen den Betriebsmodi zumindest eine Betätigung der Schaltvorrichtung (46) umfasst.

6. Energieumwandlungseinrichtung nach Anspruch 5,
**dadurch gekennzeichnet, dass**
die Steuereinheit (44) dazu vorgesehen ist, mittels der Schaltvorrichtung (46) beim Einstellen eines Betriebsmodus der Menge von Betriebsmodi eine parallele Schaltung von Widerstandsmitteln (R1, R2) des Satzes zu aktivieren oder zu deaktivieren.

7. Energieumwandlungseinrichtung nach Anspruch 5 oder 6,
**dadurch gekennzeichnet, dass**
die Steuereinheit (44) dazu vorgesehen ist, in zumindest einem Betriebsmodus der Menge von Betriebsmodi mittels der Schaltvorrichtung (46) ein erstes und ein zweites Widerstandsmittel (R1, R2) zeitlich abwechselnd zu aktivieren.

8. Schienenfahrzeug, mit einer Energieumwandlungseinrichtung (36) nach einem der vorhergehenden Ansprüche.

9. Schienenfahrzeug nach Anspruch 8, **dadurch gekennzeichnet, dass** es für einen Hochgeschwindigkeitsbetrieb über zumindest 300 km/h, insbesondere für einen Hochgeschwindigkeitsbetrieb über zumindest 350 km/h vorgesehen ist.

10. Verfahren zur Umwandlung einer in zumindest einem Modus von einer als Generatoreinheit (34) arbeitenden Einheit mit zumindest einer Synchronmaschine (20) erzeugten elektrischen Energie in einem Schienenfahrzeug, wobei zumindest ein Teil der erzeugten elektrischen Energie über eine Energieableitungseinheit (38) abgeleitet wird, und wobei die Energieableitungseinheit (38) zumindest eine Widerstandseinheit (40) aufweist,
und eine Steuereinheit (44) der Energieableitungseinheit (38), ausgehend von einem ersten Betriebsmodus, in welchem die Widerstandseinheit (40) einen ersten Widerstandswert bereitstellt, in einen zweiten Betriebsmodus umschaltet, in welchem die Widerstandseinheit (40) einen zweiten, unterschiedlichen Widerstandswert bereitstellt, **gekennzeichnet dadurch, dass**
bei einem Übergang von einem Hochgeschwindigkeitsbereich in einen mittleren Geschwindigkeitsbereich der zweite Widerstandswert kleiner als der erste Widerstandswert eingestellt wird.

11. Verfahren nach Anspruch 10,
**dadurch gekennzeichnet, dass**
es in einem Schienenfahrzeug (10) für einen Hochgeschwindigkeitsbetrieb über zumindest 300 km/h, insbesondere für einen Hochgeschwindigkeitsbetrieb über zumindest 350 km/h, durchgeführt wird.

## Claims

1. Energy conversion device for a vehicle, which has
- in at least one mode a unit operating as a generator unit (34) with at least one synchronous machine (20),
- at least one energy diverting unit (38) that is provided for the purpose of diverting at least some of the electrical energy generated by the generator unit (34), and at least one resistor unit (40),
- a detecting unit (52) for detecting at least one kinematic parameter (K) of the vehicle, wherein the kinematic parameter (K) is representative of a speed (V) of the vehicle, and
- a control unit (44) that is provided for the purpose of selecting operating modes from a plurality of operating modes, in each of which the resistor unit (40) provides a different resistance value, as a function of selecting the detected kinematic parameter (K),
**characterised in that**
the control unit is further provided for the purpose of switching over from a first operating mode to a second operating mode in the event of a transition from a high-speed range to a medium-speed range, for the purpose of reducing the resistance value.

2. Energy conversion device according to claim 1,
**characterised by**
a power supply unit (22) in which there is arranged the resistor unit (40), and which, in a drive mode, supplies electrical power to the unit.

3. Energy conversion device according to one of the preceding claims,
**characterised by**
at least one current converter unit (32.1, 32.2) that is connected to provide power between the generator unit (34) and the resistor unit (40), wherein the resistor unit (40) is connected up to a DC link (30) that may be fed from the at least one current converter unit (32.1, 32.2).

4. Energy conversion device according to claim 3,
**characterised by**
a control device (50) that controls the at least one current converter unit (32.1, 32.2) such that operation thereof in the operating modes includes at least one blocking of switching valves of the current converter unit (32.1, 32.2).

5. Energy conversion device according to one of the preceding claims,
**characterised in that**
the resistor unit (40) has a set of resistance arrangements (R1, R2) and at least one switching device (46) that is in operative connection with at least one of the resistance arrangements (R1, R2), wherein a switchover between the operating modes includes at least one actuation of the switching device (46).

6. Energy conversion device according to claim 5,
**characterised in that**
using the switching device (46) when selecting an operating mode from the plurality of operating modes, the control unit (44) is provided for the purpose of activating or deactivating a parallel circuit of resistance arrangements (R1, R2) of the set.

7. Energy conversion device according to claim 5 or 6,
**characterised in that**
the control unit (44) is provided for the purpose of activating a first and a second resistance arrangement (R1, R2) alternately, in at least one operating mode of the plurality of operating modes, using the switching device (46).

8. Rail vehicle, with an energy conversion device (36) according to one of the preceding claims.

9. Rail vehicle according to claim 8,
**characterised in that**
said rail vehicle is provided for high-speed operation over at least 300 km/h, in particular for high-speed operation over at least 350 km/h.

10. Method for converting electrical energy in a rail vehicle that is generated in at least one mode by a unit that has at least one synchronous machine (20) and operates as a generator unit (34), wherein at least some of the electrical energy generated is diverted via an energy diverting unit (38), and wherein the energy diverting unit (38) has at least one resistor unit (40),
and a control unit (44) of the energy diverting unit (38) switches over from a first operating mode, in which the resistor unit (40) provides a first resistance value, to a second operating mode, in which the resistor unit (40) provides a second, different resistance value,
**characterised in that**,
in the event of a transition from a high-speed range to a medium-speed range, the second resistance value is selected to be smaller than the first resistance value.

11. Method according to claim 10,
**characterised in that**
it is carried out in a rail vehicle (10) for high-speed operation over at least 300 km/h, in particular for high-speed operation over at least 350 km/h.

## Revendications

1. Dispositif de conversion d'énergie pour un véhicule ferroviaire, qui
- a une unité opérant dans au moins un mode en unité (34) de génératrice et ayant au moins une machine (20) synchrone,
- au moins une unité (38) de dérivation d'énergie, qui est prévue pour dériver au moins une partie d'une énergie électrique produite par l'unité (34) de génératrice, et au moins une unité (40) de résistance,
- une unité (50) de relevé pour relever au moins une grandeur (K) caractéristique cinématique du véhicule, la grandeur (K) caractéristique cinématique étant représentative d'une vitesse (V) du véhicule, et
- une unité (44) de commande prévue pour régler, en fonction de la grandeur (K) caractéristique cinématique relevée, des modes de fonctionnement parmi un ensemble de modes de fonctionnement, dans lesquels l'unité (40) de résistance met à disposition respectivement une valeur de résistance différente,
**caractérisé en ce que**
l'unité de commande est prévue, en outre, pour, s'il se produit un passage d'une plage de haute vitesse à une plage de vitesse moyenne, faire passer, pour diminuer la valeur de la résistance, d'un premier mode de fonctionnement à un deuxième mode de fonctionnement.

2. Dispositif de conversion d'énergie suivant la revendication 1,
**caractérisé par**
une unité (22) d'alimentation de puissance, dans laquelle est montée l'unité (40) de résistance et qui, dans un mode d'entraînement, alimente l'unité en puissance électrique.

3. Dispositif de conversion d'énergie suivant l'une des revendications précédentes,
**caractérisé par**
au moins une unité (32.1, 32.2) de convertisseur, qui est montée en technique de puissance entre l'unité (34) de génératrice et l'unité (40) de résistance, l'unité (40) de résistance étant connectée à un circuit (30) intermédiaire, qui peut être alimenté par la au moins une unité (32.1, 32.2) de convertisseur.

4. Dispositif de conversion d'énergie suivant la revendication 3,
**caractérisé par**
un système (50) de commande, qui commande la au moins une unité (32.1, 32.2) de convertisseur, de manière à ce que son fonctionnement comprenne, dans les modes de fonctionnement, au moins un blocage de soupapes de commutation de l'unité (32.1, 32.2) de convertisseur.

5. Dispositif de conversion d'énergie suivant l'une des revendications précédentes,
**caractérisé en ce que**
l'unité (40) de résistance a un jeu de moyens (R1, R2) de résistance et au moins un système (46) de commutation en liaison d'action avec au moins l'un des moyens (R1, R2) de résistance, un changement entre les modes de fonctionnement comprenant au moins un actionnement du système (46) de commutation.

6. Dispositif de conversion d'énergie suivant la revendication 5,
**caractérisé en ce que**
l'unité (44) de commande est prévue pour, au moyen du système (46) de commutation, lors de l'établissement d'un mode de fonctionnement parmi l'ensemble des modes de fonctionnement, activer ou désactiver un circuit parallèle de moyens (R1, R2) de résistance du jeu.

7. Dispositif de conversion d'énergie suivant la revendication 5 ou 6,
**caractérisé en ce que**
l'unité (44) de commande est prévu pour, dans au moins un mode de fonctionnement parmi l'ensemble des modes de fonctionnement, activer en alternance dans le temps un premier et un deuxième moyens (R1, R2) de résistance au moyen du système (46) de commutation.

8. Véhicule ferroviaire ayant un dispositif (36) de conversion d'énergie suivant l'une des revendications précédentes.

9. Véhicule ferroviaire suivant la revendication 8,
**caractérisé en ce que**
il est prévu, pour un fonctionnement à grande vitesse au-delà d'au moins 300 km/h, notamment pour un fonctionnement à grande vitesse au-delà d'au moins 350 km/h .

10. Procédé de conversion dans un véhicule ferroviaire d'une énergie électrique produite dans au moins un mode par une unité opérant en unité (34) de génératrice et ayant au moins un machine (20) synchrone,
dans lequel on dérive au moins une partie de l'énergie électrique produite par une unité (38) de dérivation d'énergie et dans lequel l'unité (38) de dérivation d'énergie a au moins une unité (40) de résistance,
et une unité (44) de commande de l'unité (38) de dérivation d'énergie fait passer, à partir d'un premier mode de fonctionnement, dans lequel l'unité (40) de résistance procure une première valeur de résistance, dans un deuxième mode de fonctionnement, dans lequel l'unité (40) de résistance procure une deuxième valeur de résistance différente,
**caractérisé en ce que**
lors d'un passage d'une plage de grande vitesse à une plage de vitesse moyenne, on règle la deuxième valeur de résistance à une valeur plus petite que la première valeur de résistance.

11. Procédé suivant la revendication 10,
**caractérisé en ce que**
on l'effectue, dans un véhicule (10) ferroviaire, pour un fonctionnement à grande vitesse au-delà d'au moins 300 km/h, notamment pour un fonctionnement à grande vitesse au-delà d'au moins 350 km/h .
